# EUROPEAN PATENT APPLICATION

(11) **EP 4 852 482 A1**
(43) Date of publication of application: **09.12.2026**
(21) Application number: 26183350.3
(22) Date of filing: 05.06.2026
(51) Int. Cl.: H04W 12/06, H04L 9/40, H04W 12/40, H04L 9/32

(54) **IDENTITY VERIFICATION METHODS, SYSTEMS, STORAGE MEDIA, DEVICES, AND COMPUTER PROGRAM PRODUCTS**

(30) Priority: 05.06.2025 CN 202510750795
(71) Applicant: Alipay (Hangzhou) Digital Service Technology Co., Ltd., Hangzhou, Zhejiang 310000 (CN)
(72) Inventor: ZHANG, Wanqiao, Hangzhou, Zhejiang, 310000 (CN); CHENG, Yan, Hangzhou, Zhejiang, 310000 (CN); CHEN, Weiting, Hangzhou, Zhejiang, 310000 (CN); HUANG, Lin, Hangzhou, Zhejiang, 310000 (CN)
(74) Representative: Fish & Richardson P.C.

(57) **Abstract**

Implementations of this specification disclose identity verification methods, systems, storage media, devices, and computer program products. The method includes: in response to an identity verification requirement in a service processing process, generating an identity verification request that includes a token, where the token is obtained by a service processing system by making a request to an operator server based on an obtained SIM card device number; then, sending the identity verification request to the operator server, where the identity verification request is used to enable the operator server to send a SIM card identity verification request to a SIM card after checking that the token carried in the identity verification request is consistent with a pre-recorded token, and the SIM card identity verification request is used to obtain SIM card identity verification data; and finally, receiving SIM card identity verification data returned by the operator server, and performing identity verification based on the SIM card identity verification data.

## Description

### TECHNICAL FIELD

This specification relates to the field of data transmission technologies, and in particular, to identity verification methods, systems, storage media, devices, and computer program products.

### BACKGROUND

With the development of mobile Internet technologies, device processing capabilities are continuously improved, and users have become accustomed to processing various services through mobile phones, for example, processing important services such as making financial payments and signing electronic contracts through mobile phone applications. When users process important services through applications (apps), verifying user identities to obtain service processing permission is usually a critical step in a service processing process. Identity verification can avoid identity impersonation, ensure traceability of network behavior, and enhance security of network space.

Therefore, providing a more secure and reliable identity authentication method is of paramount importance for avoiding user identity impersonation and improving security of online service processing.

### SUMMARY

Implementations of this specification provide identity verification methods, systems, storage media, devices, and computer program products. According to the method, when there is an identity verification requirement in a service processing process, an identity verification request is generated based on a pre-requested token corresponding to a SIM card device number. The identity verification request carries the obtained token for check by an operator server. Only after the check succeeds, identity verification can be performed through a SIM card. This tightly binds an initiator of the identity verification request to the SIM card, ensuring that an identity of a user initiating the identity verification request cannot be forged by a malicious attacker, thereby improving identity verification security.

An implementation of this specification provides an identity verification method, applied to a service processing system and including: in response to an identity verification requirement in a service processing process, generating an identity verification request that includes a token, where the token is obtained by the service processing system by making a request to an operator server based on an obtained SIM card device number; sending the identity verification request to the operator server, where the identity verification request is used to enable the operator server to send a SIM card identity verification request to a SIM card after checking that the token carried in the identity verification request is consistent with a pre-recorded token, and the SIM card identity verification request is used to obtain SIM card identity verification data; and receiving SIM card identity verification data returned by the operator server, and performing identity verification based on the SIM card identity verification data.

Further, in some implementations, before the generating an identity verification request that includes a token, the method further includes: obtaining the SIM card device number, generating a token acquisition request based on the SIM card device number, and sending the token acquisition request to the operator server; and receiving a token corresponding to the SIM card device number and returned by the operator server.

Further, in some implementations, the service processing system includes a service client terminal and a service server, and the generating an identity verification request that includes a token includes: in response to receiving the token returned by the operator server, generating, by the service client terminal, a service request that includes the token, and sending the service request to the service server; and processing, by the service server, the service request and generating an identity verification request that includes the token.

Further, in some implementations, the receiving SIM card identity verification data returned by the operator server, and performing identity verification based on the SIM card identity verification data includes: receiving, by the service server, the SIM card identity verification data returned by the operator server, and performing identity verification on the service request based on the SIM card identity verification data.

Further, in some implementations, the SIM card identity verification data are SIM card identity verification data signed by using a private key stored in the SIM card.

The performing identity verification on the service request based on the SIM card identity verification data includes: performing signature verification on the SIM card identity verification data based on a public key stored in the service server; and performing identity verification on the service request based on the SIM card identity verification data after the signature verification succeeds.

Further, in some implementations, after the performing, by the service server, identity verification based on the SIM card identity verification data, the method further includes: sending, by the service server, the identity verification result to the service client terminal.

An implementation of this specification further provides an identity verification method, applied to an operator server and including: receiving an identity verification request sent by a service processing system, and checking, based on a pre-recorded token, a token carried in the identity verification request; when determining that the token carried in the identity verification request is consistent with the pre-recorded token, generating a SIM card identity verification request corresponding to the identity verification request, and sending the SIM card identity verification request to the SIM card, so that the SIM card collects SIM card identity verification data based on the SIM card identity verification request; and receiving the SIM card identity verification data sent by the SIM card, and sending the SIM card identity verification data to the service processing system, so that the service processing system performs identity verification based on the SIM card identity verification data.

Further, in some implementations, before the receiving an identity verification request sent by a service processing system, the method further includes: in response to receiving a token acquisition request sent by the service processing system, generating a corresponding token based on the token acquisition request; and recording the token and sending the token to the service processing system.

An implementation of this specification further provides an identity verification method, applied to a SIM card and including: in response to receiving a SIM card identity verification request sent by the operator server, generating SIM card identity verification data corresponding to the SIM card identity verification request, where the SIM card identity verification request is generated after the operator server receives an identity verification request sent by a service processing system and checks that a token carried in the identity verification request is consistent with a pre-recorded token; and returning the SIM card identity verification data to the operator server, so that the operator server sends the SIM card identity verification data to the service processing system, and the service processing system performs identity verification based on the SIM card identity verification data.

Further, in some implementations, the generating SIM card identity verification data corresponding to the SIM card identity verification request includes: launching a SIM card identity verification interface based on the SIM card identity verification request, and receiving a confirmation instruction and/or PIN code information entered by a user in the SIM card identity verification interface; and generating the SIM card identity verification data based on the confirmation instruction and/or the PIN code information.

Further, in some implementations, the returning the SIM card identity verification data to the operator server includes: signing the SIM card identity verification data based on a private key stored in the SIM card, to obtain signed SIM card identity verification data; and returning the signed SIM card identity verification data to the operator server.

An implementation of this specification further provides an identity verification system, including a service processing system, an operator server, and a SIM card.

The service processing system is configured to: generate an identity verification request that includes a token, and send the identity verification request to the operator server, where the token is obtained by the service processing system by making a request to the operator server based on an obtained SIM card device number.

The operator server is configured to: check, based on a pre-recorded token, the token carried in the identity verification request, and when determining that the token carried in the identity verification request is consistent with the pre-recorded token, generate a SIM card identity verification request corresponding to the identity verification request, and send the SIM card identity verification request to the SIM card.

The SIM card is configured to: generate SIM card identity verification data corresponding to the SIM card identity verification request, and return the SIM card identity verification data to the operator server.

The operator server is further configured to send the SIM card identity verification data to the service processing system.

The service processing system is further configured to perform identity verification based on the SIM card identity verification data.

An implementation of this specification further provides a computer-readable storage medium. The computer-readable storage medium stores a computer program, and when the computer program is executed by a processor, the steps in the above-mentioned method are implemented.

An implementation of this specification further provides an electronic device, including a processor and a storage. The storage stores a computer program, and the computer program is suitable for being loaded and executed by the processor to perform the steps in the above-mentioned method.

An implementation of this specification further provides a computer program product. The computer program product stores at least one instruction, and when the at least one instruction is executed by a processor, the steps in the above-mentioned method are implemented.

According to the service processing method provided in implementations of this specification, in a service processing process, in response to an identity verification requirement in the service processing process, an identity verification request that includes a token is generated. The token is obtained by a service processing system by making a request to an operator server based on an obtained SIM card device number. Then, the identity verification request is sent to the operator server. The identity verification request is used to enable the operator server to send a SIM card identity verification request to a SIM card after checking that the token is consistent with a pre-recorded token. The SIM card identity verification request is used to obtain SIM card identity verification data. Finally, SIM card identity verification data returned by the operator server are received, and identity verification is performed based on the SIM card identity verification data. According to the method, when there is an identity verification requirement in a service processing process, an identity verification request is generated based on a pre-requested token corresponding to a SIM card device number. The identity verification request carries the obtained token for check by the operator server. Only after the check succeeds, identity verification can be performed through the SIM card. This tightly binds an initiator of the identity verification request to the SIM card, ensuring that an identity of a user initiating the identity verification request cannot be forged by a malicious attacker, thereby improving identity verification security.

### BRIEF DESCRIPTION OF DRAWINGS

FIG. 1 is a system architecture diagram illustrating an identity verification method, according to one or more implementations of this specification;
FIG. 2 is a schematic flowchart illustrating an identity verification method, according to one or more implementations of this specification;
FIG. 3 is a system architecture diagram illustrating an identity verification method, according to one or more implementations of this specification;
FIG. 4 is a schematic flowchart illustrating an identity verification method, according to one or more implementations of this specification;
FIG. 5 is a schematic flowchart illustrating an identity verification method, according to one or more implementations of this specification;
FIG. 6 is a schematic flowchart illustrating an identity verification method, according to one or more implementations of this specification;
FIG. 7 is a system interaction diagram illustrating an identity verification system, according to one or more implementations of this specification;
FIG. 8 is a system interaction diagram illustrating an identity verification system, according to one or more implementations of this specification; and

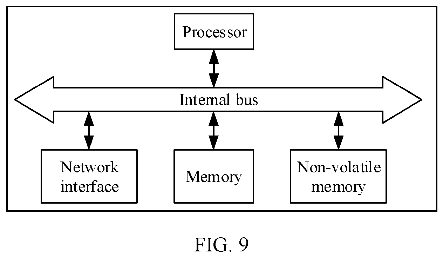

FIG. 9 is a schematic diagram illustrating a structure of an electronic device, according to one or more implementations of this specification.

### DESCRIPTION OF IMPLEMENTATIONS

To make the objectives, technical solutions, and advantages of this specification clearer, the following clearly and comprehensively describes the technical solutions of this specification with reference to specific implementations and corresponding accompanying drawings of this specification. Clearly, the described implementations are merely some but not all of implementations of this specification. All other implementations obtained by a person of ordinary skill in the art based on the implementations of this specification without creative efforts shall fall within the protection scope of this specification.

In the descriptions of one or more implementations of this specification, the term "including" and similar terms thereof should be understood as non-exclusive inclusion, namely, "including but not limited to". The term "based on" should be understood as "at least partially based on". The term "one implementation" or "this implementation" should be understood as "at least one implementation". The terms "first", "second", etc. can refer to different or same objects. Other explicit and implied definitions may be further included below.

Before the identity verification method provided in the implementations of this specification is described in detail, a related technical background is first described.

A super SIM card is a dynamic identity control technology based on number-card authentication, integrates a secure element (SE) supporting authorization and authentication such as CT and national cryptographic algorithms on a regular SIM card, and can use a SIM card in a mobile phone of a user for identity authentication. The user only needs to use the SIM card in the mobile phone to complete identity authentication. In one or more implementations of this specification, the SIM card is a super SIM card. The super SIM card usually includes a protected execution environment created through hardware isolation, to ensure that sensitive data and code are protected from malicious attacks, and in combination with a financial-grade secure element, provides security protection compliant with certifications such as international CC EAL6+, UnionPay security, and level-2 national cryptographic standards, becoming a security cornerstone for digital identity, financial payments, and other scenarios.

In a related technology, when identity authentication is performed based on a SIM card, a user usually needs to have a trusted SIM card login state, and an application can automatically request SIM card-based authentication and identity verification from an operator server based on the SIM card login state. If identity authentication is triggered in a case without a login state, the user needs to enter card number information of the SIM card, and the application requests SIM card-based authentication and identity verification from the operator server based on the card number information entered by the user. However, when the user manually enters the card number information, there is a high probability that the card number information is incorrectly entered. If the user incorrectly enters the card number information of the SIM card, the operator server requests authentication and identity verification from a SIM card with an incorrect card number, causing disturbance to a user corresponding to the SIM card with the incorrect card number.

Based on this, one or more implementations of this specification provide a SIM card-based service processing method. When there is an identity verification requirement in a service processing process, an identity verification request is generated based on a pre-requested token corresponding to a SIM card device number. The identity verification request carries the obtained token for check by an operator server. Only after the check succeeds, identity verification can be performed through a SIM card. This tightly binds an initiator of the identity verification request to the SIM card, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

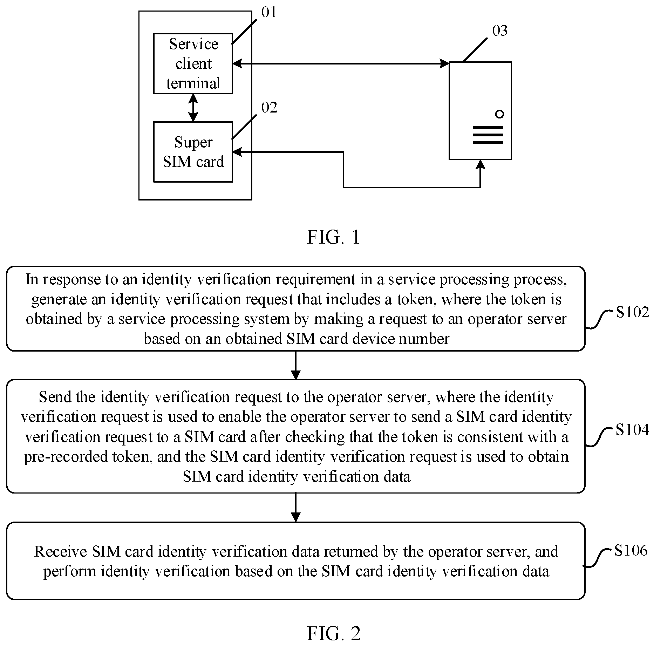

FIG. 1 is a system architecture diagram illustrating an identity verification method, according to one or more implementations of this specification. As shown in FIG. 1, the shown system includes a service processing system 01, a SIM card 02, and an operator server 03. The service processing system 01 and the SIM card 02 can be located in the same terminal device, and the service processing system 01 can communicate, through an SDK package integrated into the terminal device, with the SIM card 02 disposed in the terminal device.

The service processing system is configured to: when detecting, in a service processing process, that identity verification needs to be performed on a service request, generate an identity verification request that includes a token, where the token is obtained by the service processing system by making a request to the operator server based on an obtained SIM card device number, and send the identity verification request to the operator server. The operator server is configured to: after receiving the identity verification request, check whether the token carried in the identity verification request is consistent with a pre-recorded token, and after checking that the tokens are consistent, send a SIM card identity verification request to the SIM card. After obtaining the identity verification request, the SIM card generates SIM card identity verification data based on the SIM card identity verification request, and returns the SIM card identity verification data to the operator server. The operator server returns the SIM card identity verification data to the service processing system, and the service processing system performs identity verification based on the SIM card identity verification data. In an entire identity verification process, only after the check succeeds, identity verification can be performed through the SIM card. This tightly binds an initiator of the identity verification request to the SIM card, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

With reference to the system architecture diagram shown in FIG. 1, FIG. 2 is a schematic flowchart illustrating an identity verification method, according to one or more implementations of this specification. In implementations of this specification, the identity verification method is applied to a service processing system. The following describes in detail a procedure shown in FIG. 2. The identity verification method can specifically include the following steps.

S102: In response to an identity verification requirement in a service processing process, generate an identity verification request that includes a token, where the token is obtained by the service processing system by making a request to an operator server based on an obtained SIM card device number.

In one or more implementations of this specification, the service processing system is an electronic data processing system configured to process some specific service requests. For some services with high risk control requirements, identity verification needs to be performed in a service processing process, and a subsequent service processing procedure can be performed only after the identity verification succeeds, for example, financial services and services including sensitive information.

In implementations of this specification, during running of the service processing system, if a service processing request that needs a super SIM card to assist in authentication and identity verification is detected, the service processing request generates an identity verification request including a token and corresponding to the service processing request. The identity verification request is sent to the super SIM card through the operator server to obtain SIM card identity verification data, so that the service processing system performs identity verification on the service processing request based on the SIM card identity verification data. The token is obtained by the service processing system by making a request to the operator server based on an obtained SIM card device number.

Optionally, before generating the identity verification request that includes the token, the service processing system is further configured to: obtain the SIM card device number, generate a token acquisition request based on the SIM card device number, and send the token acquisition request to the operator server; and receive a token corresponding to the SIM card device number and returned by the operator server.

Optionally, the service processing system includes a service client terminal and a service server. In the service processing process, the service client terminal generates a service processing request in response to a user operation, and sends the service processing request to the service server, and the service server processes the service processing request sent by the service client terminal. In the service processing process, in response to the identity verification requirement in the service processing process, the service client terminal obtains the SIM card device number, generates the token acquisition request based on the SIM card device number, and sends the token acquisition request to the operator server; and receives the token corresponding to the SIM card device number and returned by the operator server. After receiving the token returned by the operator server, the service client terminal generates a service request that includes the token, and sends the service request to the service server, and the service server processes the service request and generates an identity verification request that includes the token.

S104: Send the identity verification request to the operator server, where the identity verification request is used to enable the operator server to send a SIM card identity verification request to a SIM card after checking that the token is consistent with a pre-recorded token, and the SIM card identity verification request is used to obtain SIM card identity verification data.

In implementations of this specification, after generating the identity verification request that includes the token, the service processing system sends the identity verification request to the operator server. The identity verification request includes the token generated by the operator server based on the SIM card device number. After receiving the identity verification request, the operator server checks whether the token carried in the identity verification request is consistent with the pre-recorded token. If the check indicates consistency, the operator server sends the SIM card identity verification request to the SIM card to request the SIM card identity verification data from the super SIM card by using the SIM card identity verification request. It can be understood that only after the check on the token succeeds, identity verification can be performed through the SIM card. This tightly binds an initiator of the identity verification request to the SIM card, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

It is worthwhile to note that, that the operator server sends the SIM card identity verification request to the SIM card means that the operator server sends the SIM card identity verification request to a trusted execution environment of the SIM card. The trusted execution environment can be understood as an independent and protected execution environment created through hardware isolation, to ensure that sensitive data and code are protected from malicious attacks. The user can respond to and execute the SIM card identity verification request in the trusted execution environment to generate the SIM card identity verification data, so that the service processing system performs identity verification based on the SIM card identity verification data.

S106: Receive SIM card identity verification data returned by the operator server, and perform identity verification based on the SIM card identity verification data.

In implementations of this specification, the operator server sends the SIM card identity verification request to the super SIM card to obtain the SIM card identity verification data, and then the operator server sends the SIM card identity verification data to the service processing system, and the service processing system performs identity verification based on the SIM card identity verification data.

Optionally, the service processing system includes a service client terminal and a service server. The receiving SIM card identity verification data returned by the operator server, and performing identity verification based on the SIM card identity verification data includes: receiving, by the service server, the SIM card identity verification data returned by the operator server, and performing identity verification on the service request based on the SIM card identity verification data.

Optionally, the SIM card identity verification data are SIM card identity verification data signed by using a private key stored in the SIM card. The performing identity verification on the service request based on the SIM card identity verification data includes: performing signature verification on the SIM card identity verification data based on a public key stored in the service server; and performing identity verification on the service request based on the SIM card identity verification data after the signature verification succeeds.

Optionally, the service server sends an identity verification result to the service client terminal.

According to the service processing method provided in implementations of this specification, in a service processing process, in response to an identity verification requirement in the service processing process, an identity verification request that includes a token is generated. The token is obtained by a service processing system by making a request to an operator server based on an obtained SIM card device number. Then, the identity verification request is sent to the operator server. The identity verification request is used to enable the operator server to send a SIM card identity verification request to a SIM card after checking that the token is consistent with a pre-recorded token. The SIM card identity verification request is used to obtain SIM card identity verification data. Finally, SIM card identity verification data returned by the operator server are received, and identity verification is performed based on the SIM card identity verification data. According to the method, when there is an identity verification requirement in a service processing process, an identity verification request is generated based on a pre-requested token corresponding to a SIM card device number. The identity verification request carries the obtained token for check by the operator server. Only after the check succeeds, identity verification can be performed through the SIM card. This tightly binds an initiator of the identity verification request to the SIM card, ensuring that an identity of a user initiating the identity verification request cannot be forged by a malicious attacker, thereby improving identity verification security.

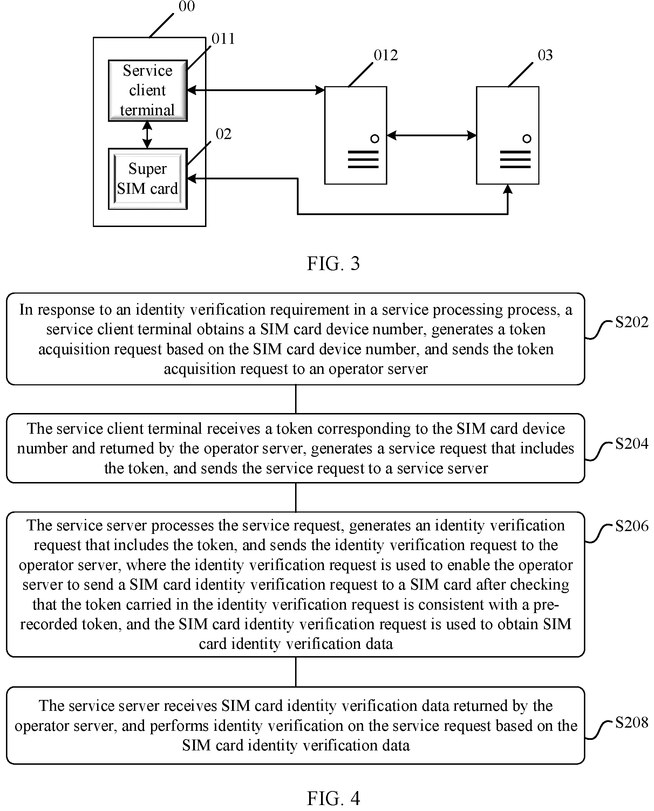

In implementations, the service processing system includes a service client terminal and a service server. FIG. 3 is a system architecture diagram illustrating an identity verification method, according to one or more implementations of this specification. As shown in FIG. 3, the shown system includes a service client terminal 011, a service server 012, a super SIM card 02, and an operator server 03. The service client terminal 011 and the SIM card 02 are located in the same terminal device 00.

The service client terminal 011 can be an application or can be a web page developed based on an HTML5 technology. The service client terminal 011 communicates with the SIM card 02 through an integrated SDK package or a JavaScript file corresponding to the SIM card. The terminal device 00, the service server 012, and the operator server 03 are pairwise communicatively connected.

With reference to the system architecture diagram shown in FIG. 3, FIG. 4 is a schematic flowchart illustrating an identity verification method, according to one or more implementations of this specification. In implementations of this specification, the identity verification method can specifically include the following steps.

S202: In response to an identity verification requirement in a service processing process, a service client terminal obtains a SIM card device number, generates a token acquisition request based on the SIM card device number, and sends the token acquisition request to an operator server.

In implementations of this specification, during running of the service client terminal, if a service request that needs a super SIM card to assist in authentication and identity verification is detected, before the service request is sent to a service server, a SIM card device number corresponding to the super SIM card is first obtained, and then a token acquisition request including the SIM card device number is generated. The service client terminal sends the token acquisition request to the operator server to request a corresponding token.

The token is an encrypted string with a short life cycle, and is used for identity verification in a subsequent procedure.

S204: The service client terminal receives a token corresponding to the SIM card device number and returned by the operator server, generates a service request that includes the token, and sends the service request to the service server.

In implementations of this specification, the operator generates the corresponding token based on the SIM card device number carried in the token identity verification request, and returns the token to the service client terminal. The service client terminal receives the token corresponding to the SIM card device number and returned by the operator server, and sends the service request to the service server. The service request is a service request that needs a super SIM card to assist in authentication and identity verification.

S206: The service server processes the service request, generates an identity verification request that includes the token, and sends the identity verification request to the operator server, where the identity verification request is used to enable the operator server to send a SIM card identity verification request to the SIM card after checking that the token carried in the identity verification request is consistent with a pre-recorded token, and the SIM card identity verification request is used to obtain SIM card identity verification data.

In implementations of this specification, the service server receives the service request including the token and sent by the service client terminal, generates the identity verification request that includes the token based on the service request, and sends the identity verification request to the operator server. The identity verification request is used to enable the operator server to send the SIM card identity verification request to the SIM card after checking that the token carried in the identity verification request is consistent with the pre-recorded token. The SIM card identity verification request is used to obtain the SIM card identity verification data. Only after the operator server checks that the tokens are consistent, identity verification can be performed through the SIM card. This tightly binds an initiator of the identity verification request to the SIM card, ensuring that an identity of a user initiating the identity verification request cannot be forged by a malicious attacker, thereby improving identity verification security.

It is worthwhile to further note that when there is no SIM card login state information, the user needs to manually enter a SIM card number when identity verification needs to be requested from the SIM card. Then, the service client terminal generates a service request that includes the SIM card number, and sends the service request to the service server. Then, the service server sends an identity verification request that includes the SIM card number to the operator server. The operator server sends a SIM card identity verification request to the corresponding SIM card corresponding to the SIM card number carried in the identity verification request. If the user incorrectly enters the SIM card number, the operator server sends the SIM card identity verification request to an incorrect SIM card, causing disturbance to a user corresponding to the incorrect SIM card. In implementations of this specification, the token corresponding to the SIM card is requested from the operator server by invoking the SIM card and a communication interface of the operator server, and the service request that carries the token is generated. The service server generates the identity verification request that carries the token based on the service request, and sends the identity verification request to the operator server. The operator server checks whether the token carried in the identity verification request is consistent with the token generated based on the token acquisition request in step S102. It can be determined whether the SIM card corresponding to the identity verification request is consistent with the SIM card requesting the token. After the check indicates consistency, the SIM card identity verification request is sent to the SIM card indicated in the identity verification request. If the check indicates inconsistency, a service procedure is terminated, thereby avoiding a case in which there is an incorrect SIM card in the identity verification request and consequently the operator server sends the SIM card identity verification request to the incorrect SIM card. In addition, in a scenario without a login state, authentication and identity verification can be performed on a service based on the SIM card, without causing disturbance to another user.

S208: The service server receives SIM card identity verification data returned by the operator server, and performs identity verification on the service request based on the SIM card identity verification data.

In implementations of this specification, the operator server sends the SIM card identity verification request to the SIM card to obtain the SIM card identity verification data returned by the SIM card, and returns the SIM card identity verification data to the service server based on the identity verification request. The service server performs, based on the SIM card identity verification data, service processing on the service request sent by the service client terminal, and generates a service processing result, and then the service client terminal sends the service processing result to the service client terminal.

That the operator server sends the SIM card identity verification request to the SIM card to obtain the SIM card identity verification data returned by the SIM card can be specifically as follows: The operator server sends the SIM card identity verification request to the SIM card, and the SIM card displays a SIM card identity verification interface in a display interface of a terminal device. The SIM card identity verification interface can generate the SIM card identity verification data based on user input information, and then the SIM card sends the SIM card identity verification data to the operator server through an operator BIP link. The operator server sends the SIM card identity verification data to the service client terminal based on the identity verification request.

In practice, the trusted execution environment of the super SIM card and the client server respectively pre-store a private key and a public key. After the super SIM card generates the SIM card identity verification data based on the SIM card identity verification request, the super SIM card signs the SIM card identity verification data based on the pre-stored private key, and sends signed SIM card identity verification data to the client server through forwarding by the operator server. The client server decrypts the signed SIM card identity verification data based on the pre-stored public key, to obtain the SIM card identity verification data, and then performs identity verification on the service request based on the SIM card identity verification data.

In implementations of this specification, when there is an identity verification requirement in a service processing process, an identity verification request is generated based on a pre-requested token corresponding to a SIM card device number. The identity verification request carries the obtained token for check by an operator server. Only after the check succeeds, identity verification can be performed through a SIM card. This tightly binds an initiator of the identity verification request to the SIM card, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

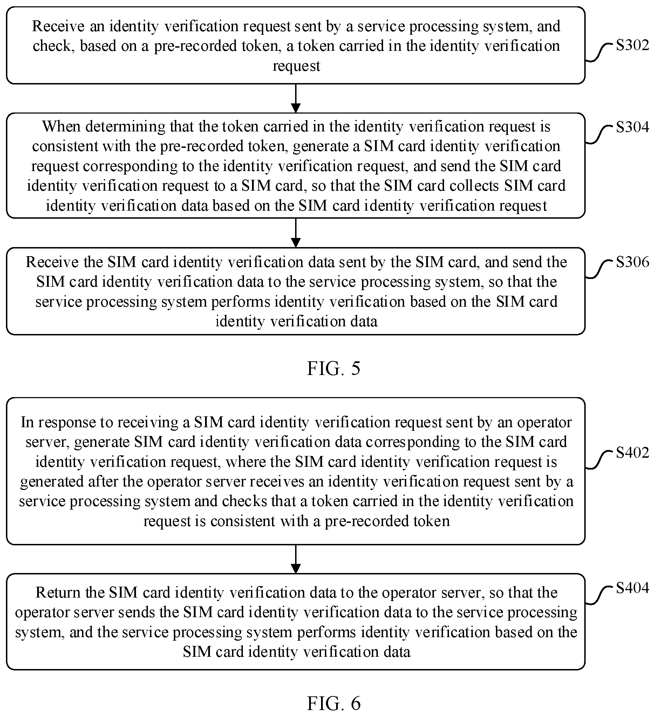

FIG. 5 is a schematic flowchart illustrating an identity verification method, according to one or more implementations of this specification. The method is applied to an operator server. As shown in FIG. 5, the method includes the following steps.

S302: Receive an identity verification request sent by a service processing system, and check, based on a pre-recorded token, a token carried in the identity verification request.

In implementations of this specification, in a service processing process, in response to an identity verification requirement in a service request, the service processing system generates an identity verification request that includes a token, and then sends the identity verification request to the operator server. The operator server checks, based on the pre-recorded token, the token carried in the identity verification request.

The token pre-recorded by the operator server is generated based on a token acquisition request sent by the service processing system. Before the service processing system sends the identity verification request to the operator server, a SIM card device number corresponding to a super SIM card is first obtained. The super SIM card and the service processing system can be carried in the same terminal device. The service processing system generates a token acquisition request based on the obtained SIM card device number, and then sends the token acquisition request to the operator server. The operator server generates a token corresponding to the SIM card device number based on the token acquisition request, records the token, and returns the token to the service processing system. The service processing system generates an identity verification request that includes the returned token based on the token, and sends the identity verification request to the operator server.

In implementations, the service processing system includes a service client terminal and a service server. The service client terminal obtains the SIM card device number, generates the token acquisition request based on the SIM card device number, and sends the token acquisition request to the operator server. Then, the service client terminal receives the token corresponding to the SIM card device number and returned by the operator server, generates a service request that includes the token, and sends the service request to the service server. Then, the service server processes the service request, generates the identity verification request that includes the token, and sends the identity verification request to the operator server. In this implementation, the service client terminal and the super SIM card can be located in the same terminal device, and the service client terminal communicates with the super SIM card through an integrated SDK package or a JavaScript file corresponding to the super SIM card.

S304: When determining that the token carried in the identity verification request is consistent with the pre-recorded token, generate a SIM card identity verification request corresponding to the identity verification request, and send the SIM card identity verification request to a SIM card, so that the SIM card collects SIM card identity verification data based on the SIM card identity verification request.

It can be understood that the identity verification request carries the obtained token for check by the operator server. Only after the check succeeds, identity verification can be performed through the SIM card. This tightly binds an initiator of the identity verification request to the SIM card, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

S306: Receive the SIM card identity verification data sent by the SIM card, and send the SIM card identity verification data to the service processing system, so that the service processing system performs identity verification based on the SIM card identity verification data.

In implementations of this specification, during service processing, the service client terminal requests identity authentication and service identity verification from the SIM card, and the service server processes a service request based on SIM identity verification data generated by the SIM card, thereby improving security of online service processing. Before the service request is initiated, token data are obtained from the operator server through the SIM card, and then the service request carries the obtained token for check by the operator server. After the check indicates consistency, a SIM card identity verification request is sent to the SIM card indicated in the identity verification request. If the check indicates inconsistency, a service procedure is terminated, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

FIG. 6 illustrates an identity verification method, according to one or more implementations of this specification. The method is applied to a service server. As shown in FIG. 6, the method includes the following steps.

S402: In response to receiving a SIM card identity verification request sent by an operator server, generate SIM card identity verification data corresponding to the SIM card identity verification request, where the SIM card identity verification request is generated after the operator server receives an identity verification request sent by a service processing system and checks that a token carried in the identity verification request is consistent with a pre-recorded token.

After the service processing system sends the identity verification request that includes the token to the operator server, the operator server requests the SIM card identity verification data from a corresponding super SIM card based on SIM card information carried in the identity verification request. After receiving the identity verification request sent by the service server, the operator server checks whether the token carried in the identity verification request is consistent with the pre-recorded token, and sends the SIM card identity verification request to the corresponding super SIM card when the check indicates consistency. After receiving the SIM card identity verification request sent by the operator server, the super SIM card pops up a SIM card identity verification interface in a display interface of a terminal device, and collects the SIM card identity verification data based on the SIM card identity verification interface.

The SIM card identity verification interface can be a predefined identity verification interface corresponding to a service request.

Optionally, the collecting the SIM card identity verification data based on the SIM card identity verification interface can be specifically: receiving a confirmation instruction and/or PIN code information entered by a user in the SIM card identity verification interface; and generating the SIM card identity verification data based on the confirmation instruction and/or the PIN code information. For example, the SIM card identity verification interface can include identity verification query information, an identity verification confirmation control, and an identity verification rejection control corresponding to the service request. In response to a confirmation instruction of the user for the identity verification confirmation control, the SIM card generates SIM card identity verification data for identity verification confirmation based on the confirmation instruction. Alternatively, in response to a rejection instruction of the user for the identity verification rejection control, the SIM card generates SIM card identity verification data for identity verification rejection based on the rejection instruction.

S404: Return the SIM card identity verification data to the operator server, so that the operator server sends the SIM card identity verification data to the service processing system, and the service processing system performs identity verification based on the SIM card identity verification data.

After generating the SIM card identity verification data, the SIM card sends the SIM card identity verification data to the operator server through an operator BIP link, so that the operator server sends the SIM card identity verification data to the service server, and the service server performs identity verification on the service request based on the SIM card identity verification data.

Optionally, the returning the SIM card identity verification data to the operator server can be specifically: signing the SIM card identity verification data based on a private key stored in the SIM card, to obtain signed SIM card identity verification data; and returning the signed SIM card identity verification data to the operator server.

It is worthwhile to note that when the user enables a SIM card identity verification service, the SIM card generates a pair including a public key and a private key. The private key is stored in a secure element (SE) of the SIM card, and the public key is sent by the SIM card to the service server through the operator client terminal and securely stored. After generating the SIM card identity verification data, the SIM card signs the SIM card identity verification data based on the pre-stored private key, to obtain the signed SIM card identity verification data. Then, the SIM card returns the signed SIM card identity verification data to the operator server, so that the operator server sends the signed SIM card identity verification data to the service server. The service server verifies the signed SIM card identity verification data based on the pre-stored public key, and processes the service request based on the SIM card identity verification data after the signature verification succeeds. Signing with the private key and signature verification/decryption with the public key can further improve data transmission security in an identity verification process.

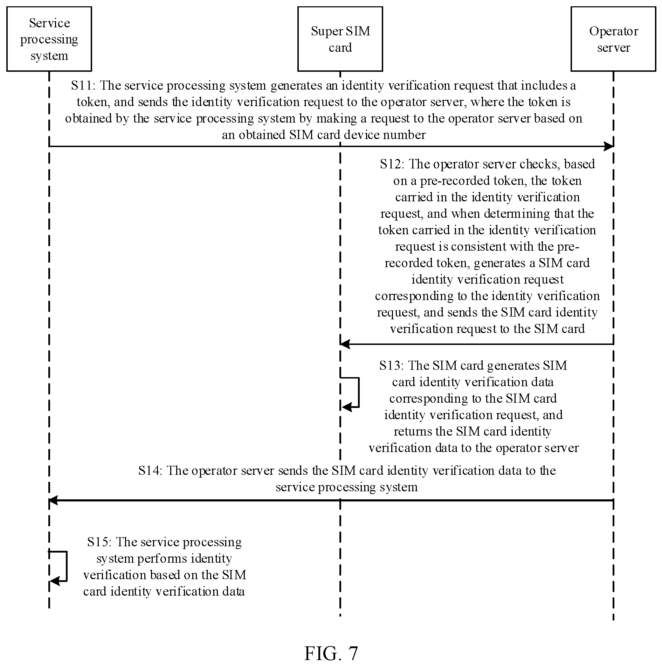

FIG. 7 is a schematic system interaction diagram illustrating an identity verification system, according to one or more implementations of this specification. As shown in FIG. 7, the identity verification system includes a service processing system, an operator server, and a SIM card. The following interaction procedure is included.

S11: The service processing system generates an identity verification request that includes a token, and sends the identity verification request to the operator server, where the token is obtained by the service processing system by making a request to the operator server based on an obtained SIM card device number.

S12: The operator server checks, based on a pre-recorded token, the token carried in the identity verification request, and when determining that the token carried in the identity verification request is consistent with the pre-recorded token, generates a SIM card identity verification request corresponding to the identity verification request, and sends the SIM card identity verification request to the SIM card.

S13: The SIM card generates SIM card identity verification data corresponding to the SIM card identity verification request, and returns the SIM card identity verification data to the operator server.

S14: The operator server sends the SIM card identity verification data to the service processing system.

S15: The service processing system performs identity verification based on the SIM card identity verification data.

That is, the service processing system is configured to: when detecting, in a service processing process, that identity verification needs to be performed on a service request, generate an identity verification request that includes a token, where the token is obtained by the service processing system by making a request to the operator server based on an obtained SIM card device number, and send the identity verification request to the operator server. The operator server is configured to: after receiving the identity verification request, check whether the token carried in the identity verification request is consistent with a pre-recorded token, and after checking that the tokens are consistent, send a SIM card identity verification request to the SIM card. After obtaining the identity verification request, the SIM card generates SIM card identity verification data based on the SIM card identity verification request, and returns the SIM card identity verification data to the operator server. The operator server returns the SIM card identity verification data to the service processing system, and the service processing system performs identity verification based on the SIM card identity verification data. In an entire identity verification process, only after the check succeeds, identity verification can be performed through the SIM card. This tightly binds an initiator of the identity verification request to the SIM card, thereby preventing the operator server from sending the identity verification request to an incorrect SIM card. Therefore, the identity verification method is applicable to performing authentication and identity verification based on the SIM card in a case without a login state, without causing disturbance to another user by sending the identity verification request to an incorrect SIM card. In addition, it can be ensured that an identity of a user initiating the identity verification request cannot be forged by a malicious attacker, thereby improving identity verification security.

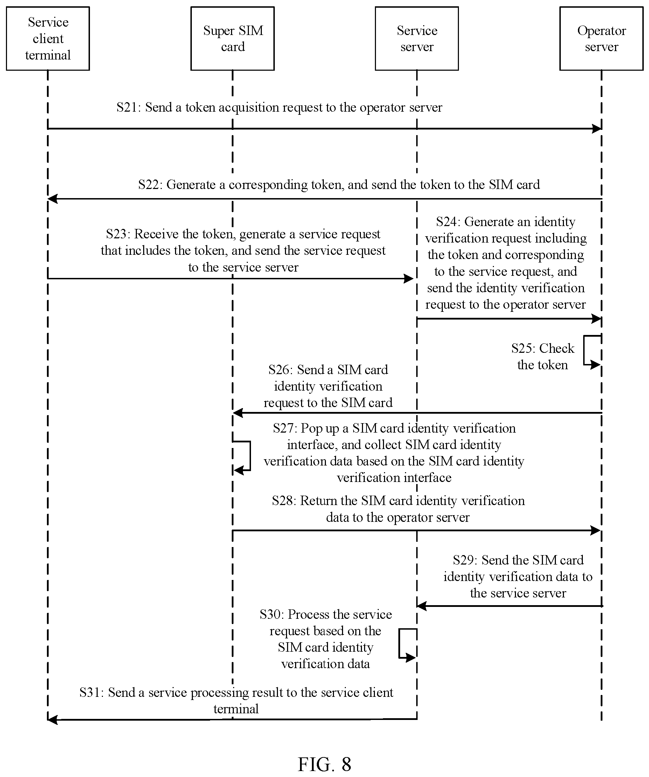

Further, in implementations, the service processing system includes a service client terminal and a service server. Before the identity verification request that includes the token is generated, the service client terminal requests the token from the operator server. FIG. 8 is a schematic system interaction diagram illustrating an identity verification system, according to one or more implementations of this specification. As shown in FIG. 7, the identity verification system includes a service client terminal, a service server, an operator server, and a SIM card. The following interaction procedure is specifically included.

S21: Send a token acquisition request to the operator server.

During running of the service client terminal, if a service request that needs a super SIM card to assist in authentication and identity verification is detected, before the service request is sent to the service server, a SIM card device number corresponding to the super SIM card is first obtained, then a token acquisition request is generated based on the SIM card device number, and the token acquisition request is sent to the operator server through an operator BIP link.

S22: Generate a corresponding token, and send the token to the SIM card.

After receiving the token acquisition request sent by the SIM card, the operator server generates the token corresponding to the SIM card based on the SIM card device number carried in the token acquisition request, and sends the generated token to the service client terminal through the operator BIP link.

S23: Receive the token, generate a service request that includes the token, and send the service request to the service server.

S24: Generate an identity verification request including the token and corresponding to the service request, and send the identity verification request to the operator server.

After receiving the token corresponding to the SIM card, the service client terminal generates the service request that includes the token, and sends the service request to the service server. When the service server identifies that the service request needs a super SIM card to assist in authentication and identity verification, the service server generates the identity verification request that includes the token, and sends the identity verification request to the operator server.

S25: Check the token.

After receiving the identity verification request sent by the service server, the operator server checks whether the token carried in the identity verification request is consistent with the token generated based on the token acquisition request. If the check indicates consistency, it is proved that the SIM card corresponding to the identity verification request is consistent with the SIM card that sends the token acquisition request. If the check indicates inconsistency, it is proved that the SIM card corresponding to the identity verification request is different from the SIM card that previously requests the token.

Optionally, the token acquisition request includes a unique request ID, and the service request and the identity verification request include a unique request ID that is the same as that in the token acquisition request. When the operator client terminal generates the token based on the token acquisition request, the operator client terminal records the unique request ID. When the operator client terminal receives the identity verification request, the operator client terminal can determine the corresponding token acquisition request based on the unique request ID carried in the identity verification request, to determine the SIM card that sends the token acquisition request, and then determine, by checking whether the token carried in the identity verification request is consistent with the token generated based on the token acquisition request, whether the SIM card corresponding to the identity verification request is consistent with the SIM card that sends the token acquisition request.

S26: Send a SIM card identity verification request to the SIM card.

The SIM card identity verification request is sent to the SIM card when the check indicates consistency.

It can be understood that when there is no SIM card login state information, the user needs to manually enter a SIM card number when identity verification needs to be requested from the SIM card. Then, the service client terminal generates a service request that includes the SIM card number, and sends the service request to the service server. Then, the service server sends an identity verification request that includes the SIM card number to the operator server. The operator server sends a SIM card identity verification request to the corresponding SIM card corresponding to the SIM card number carried in the identity verification request. If the user incorrectly enters the SIM card number, the operator server sends the SIM card identity verification request to an incorrect SIM card, causing disturbance to a user corresponding to the incorrect SIM card. In implementations of this specification, the token corresponding to the SIM card is requested from the operator server by invoking the SIM card and a communication interface of the operator server, and the service request that carries the token is generated. The service server generates the identity verification request that carries the token based on the service request, and sends the identity verification request to the operator server. The operator server checks whether the token carried in the identity verification request is consistent with the token generated based on the token acquisition request. It can be determined whether the SIM card corresponding to the identity verification request is consistent with the SIM card requesting the token. After the check indicates consistency, the SIM card identity verification request is sent to the SIM card indicated in the identity verification request. If the check indicates inconsistency, a service procedure is terminated, thereby avoiding a case in which there is an incorrect SIM card in the identity verification request and consequently the operator server sends the SIM card identity verification request to the incorrect SIM card. In addition, in a scenario without a login state, authentication and identity verification can be performed on a service based on the SIM card, without causing disturbance to another user.

S27: Pop up a SIM card identity verification interface, and collect SIM card identity verification data based on the SIM card identity verification interface.

After receiving the SIM card identity verification request sent by the operator server, the SIM card pops up the SIM card identity verification interface in a display interface of a terminal device, and collects the SIM card identity verification data based on the SIM card identity verification interface.

S28: Return the SIM card identity verification data to the operator server.

After generating the SIM card identity verification data, the SIM card sends the SIM card identity verification data to the operator server through the operator BIP link.

S29: Send the SIM card identity verification data to the service server.

S30: Process the service request based on the SIM card identity verification data.

The operator server sends the SIM card identity verification data to the service server, so that the service server performs service processing on the service request based on the SIM card identity verification data.

S31: Send a service processing result to the service client terminal.

The service server sends the service processing result to the service client terminal.

In implementations of this specification, during service processing, the service client terminal requests identity authentication and service identity verification from the SIM card, and the service server processes a service request based on SIM identity verification data generated by the SIM card, thereby improving security of online service processing. Before the service request is initiated, token data are obtained from the operator server through the SIM card, and then the service request carries the obtained token for check by the operator server. After the check indicates consistency, a SIM card identity verification request is sent to the SIM card indicated in the identity verification request. If the check indicates inconsistency, a service procedure is terminated, thereby avoiding a case in which there is an incorrect SIM card in the identity verification request and consequently the operator server sends the SIM card identity verification request to the incorrect SIM card. In addition, in a scenario without a login state, authentication and identity verification can be performed on a service based on the SIM card, without causing disturbance to another user. Further, when the service request is a number-retrieval login service in a scenario without a login state, performing identity authentication by using the SIM card can avoid a risk that a user login state is stolen by a black-market actor.

An implementation of this specification further provides a computer-readable storage medium. The computer-readable storage medium stores a computer program, and when the computer program is executed by a processor, the above-mentioned identity verification method is implemented. For a specific execution process, references can be made to specific descriptions in the above-mentioned related implementations. Details are omitted here for simplicity.

This specification further provides a computer program product. The computer program product stores at least one instruction. The at least one instruction is loaded and executed by a processor to perform the above-mentioned identity verification method. For a specific execution process, references can be made to specific descriptions in the above-mentioned related implementations. Details are omitted here for simplicity.

An implementation of this specification further provides a schematic diagram illustrating a structure of an electronic device shown in FIG. 7. As shown in FIG. 7, in terms of hardware, the electronic device can include a processor, an internal bus, a network interface, a memory, and a non-volatile memory, and certainly may further include hardware needed by another service. The processor reads a corresponding computer program from the non-volatile memory into the memory and runs the computer program, to implement the above-mentioned identity verification method. For a specific execution process, references can be made to specific descriptions in the above-mentioned related implementations. Details are omitted here for simplicity.

Certainly, in addition to software implementations, another implementation is not excluded in this specification, for example, a logic device or a combination of hardware and software. In other words, an execution body of the following processing procedure is not limited to each logical unit, and can be hardware or a logic device.

The implementations of this specification are described in a progressive way. For same or similar parts in the implementations, references can be made to each other. Each implementation focuses on a difference from another implementation. Particularly, the computer-readable storage medium, the computer program product, and the electronic device shown in FIG. 7 are basically similar to the method implementations and therefore are described briefly. For related parts, references can be made to related descriptions in the method implementations.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be in a form of a microprocessor or a processor, a computer-readable medium that stores computer-readable program code (such as software or firmware) that can be executed by the microprocessor or the processor, a logic gate, a switch, an application-specific integrated circuit (ASIC), a programmable logic controller, or an embedded microcontroller. Examples of the controller include but are not limited to the following microcontrollers: ARC 625D, Atmel AT91SAM, Microchip PIC18F26K20, and Silicone Labs C8051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware part, and an apparatus that is configured to implement various functions and that is included in the controller can also be considered as a structure in the hardware part. Alternatively, an apparatus configured to implement various functions can be considered as both a software module for implementing a method and a structure in a hardware part.

The systems, apparatuses, modules, or units described in the above-mentioned implementations can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing the apparatus into various units based on functions. Certainly, when this specification is implemented, the functions of the units can be implemented in one or more pieces of software and/or hardware.

A person skilled in the art should understand that the implementations of this specification can be provided as methods, systems, or computer program products. Therefore, this specification can use a form of hardware only implementations, software only implementations, or implementations with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This specification is described with reference to the flowcharts and/or the block diagrams of the method, the device (system), and the computer program product according to the implementations of this specification. It should be understood that each procedure and/or block in the flowcharts and/or the block diagrams and a combination of procedures and/or blocks in the flowcharts and/or the block diagrams can be implemented by using computer program instructions. These computer program instructions can be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable memory that can direct a computer or another programmable data processing device to work in a specific way, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more central processing units (CPU), input/output interfaces, network interfaces, and memories.

The memory may include a non-persistent memory, a random access memory (RAM), a nonvolatile memory, and/or another form in a computer-readable medium, for example, a read-only memory (ROM) or a flash memory (flash RAM). The memory is an example of the computer-readable medium.

The computer-readable medium includes persistent, non-persistent, removable, and non-removable media that can store information by using any method or technology. The information can be computer-readable instructions, a data structure, a program module, or other data. Examples of the computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device, or any other non-transmission medium. The computer storage medium can be configured to store information accessible by the computing device. As described in this specification, the computer-readable medium does not include computer-readable transitory media such as a modulated data signal and a carrier.

It is worthwhile to further note that the terms "include", "comprise", or any other variants thereof are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes a..." does not preclude the presence of additional identical elements in the process, method, product, or device that includes the element.

A person skilled in the art should understand that the implementations of this specification can be provided as methods, systems, or computer program products. Therefore, this specification can use a form of hardware only implementations, software only implementations, or implementations with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This specification can be described in the general context of computer-executable instructions executed by a computer, for example, a program module. Usually, the program module includes a routine, a program, an object, a component, a data structure, etc. for executing a specific task or implementing a specific abstract data type. This specification can alternatively be practiced in distributed computing environments. In the distributed computing environments, tasks are executed by remote processing devices connected through a communication network. In the distributed computing environments, the program module can be located in local and remote computer storage media including storage devices.

The implementations of this specification are described in a progressive way. For same or similar parts in the implementations, references can be made to each other. Each implementation focuses on a difference from another implementation. Particularly, the system implementations are basically similar to the method implementations, and therefore are described briefly. For related parts, references can be made to some descriptions in the method implementations.

The above-mentioned descriptions are merely implementations of this specification, and are not intended to limit this specification. A person skilled in the art can make various changes and variations to this specification. Any modification, equivalent replacement, improvement, etc. made without departing from the spirit and principle of this specification shall fall within the scope of the claims of this specification.

### EXAMPLES

1. An identity verification method, applied to a service processing system and comprising:
   in response to an identity verification requirement in a service processing process, generating an identity verification request that comprises a token, wherein the token is obtained by the service processing system by making a request to an operator server based on an obtained SIM card device number;
   sending the identity verification request to the operator server, wherein the identity verification request is used to enable the operator server to send a SIM card identity verification request to a SIM card after checking that the token carried in the identity verification request is consistent with a pre-recorded token, and the SIM card identity verification request is used to obtain SIM card identity verification data; and
   receiving SIM card identity verification data returned by the operator server, and performing identity verification based on the SIM card identity verification data.
2. The method according to example 1, before the generating an identity verification request that comprises a token, further comprising:
   obtaining the SIM card device number, generating a token acquisition request based on the SIM card device number, and sending the token acquisition request to the operator server; and
   receiving a token corresponding to the SIM card device number and returned by the operator server.
3. The method according to example 1, wherein the service processing system comprises a service client terminal and a service server, and the generating an identity verification request that comprises a token comprises:
   in response to receiving the token returned by the operator server, generating, by the service client terminal, a service request that comprises the token, and sending the service request to the service server; and
   processing, by the service server, the service request and generating an identity verification request that comprises the token.
4. The method according to example 3, wherein the receiving SIM card identity verification data returned by the operator server, and performing identity verification based on the SIM card identity verification data comprises:
   receiving, by the service server, the SIM card identity verification data returned by the operator server, and performing identity verification on the service request based on the SIM card identity verification data.
5. The method according to example 4, wherein the SIM card identity verification data are SIM card identity verification data signed by using a private key stored in the SIM card; and
   the performing identity verification on the service request based on the SIM card identity verification data comprises:
   performing signature verification on the SIM card identity verification data based on a public key stored in the service server; and
   performing identity verification on the service request based on the SIM card identity verification data after the signature verification succeeds.
6. The method according to example 4, after the performing, by the service server, identity verification based on the SIM card identity verification data, further comprising:
   sending, by the service server, the identity verification result to the service client terminal.
7. An identity verification method, applied to an operator server and comprising:
   receiving an identity verification request sent by a service processing system, and checking, based on a pre-recorded token, a token carried in the identity verification request;
   when determining that the token carried in the identity verification request is consistent with the pre-recorded token, generating a SIM card identity verification request corresponding to the identity verification request, and sending the SIM card identity verification request to the SIM card, so that the SIM card collects SIM card identity verification data based on the SIM card identity verification request; and
   receiving the SIM card identity verification data sent by the SIM card, and sending the SIM card identity verification data to the service processing system, so that the service processing system performs identity verification based on the SIM card identity verification data.
8. The method according to example 7, before the receiving an identity verification request sent by a service processing system, further comprising:
   in response to receiving a token acquisition request sent by the service processing system, generating a corresponding token based on the token acquisition request; and
   recording the token and sending the token to the service processing system.
9. An identity verification method, applied to a SIM card and comprising:
   in response to receiving a SIM card identity verification request sent by the operator server, generating SIM card identity verification data corresponding to the SIM card identity verification request, wherein the SIM card identity verification request is generated after the operator server receives an identity verification request sent by a service processing system and checks that a token carried in the identity verification request is consistent with a pre-recorded token; and
   returning the SIM card identity verification data to the operator server, so that the operator server sends the SIM card identity verification data to the service processing system, and the service processing system performs identity verification based on the SIM card identity verification data.
10. The method according to example 9, wherein the generating SIM card identity verification data corresponding to the SIM card identity verification request comprises:
   launching a SIM card identity verification interface based on the SIM card identity verification request, and receiving a confirmation instruction and/or PIN code information entered by a user in the SIM card identity verification interface; and
   generating the SIM card identity verification data based on the confirmation instruction and/or the PIN code information.
11. The method according to example 9, wherein the returning the SIM card identity verification data to the operator server comprises:
   signing the SIM card identity verification data based on a private key stored in the SIM card, to obtain signed SIM card identity verification data; and
   returning the signed SIM card identity verification data to the operator server.
12. An identity verification system, comprising a service processing system, an operator server, and a SIM card, wherein
   the service processing system is configured to: generate an identity verification request that comprises a token, and send the identity verification request to the operator server, wherein the token is obtained by the service processing system by making a request to the operator server based on an obtained SIM card device number;
   the operator server is configured to: check, based on a pre-recorded token, the token carried in the identity verification request, and when determining that the token carried in the identity verification request is consistent with the pre-recorded token, generate a SIM card identity verification request corresponding to the identity verification request, and send the SIM card identity verification request to the SIM card;
   the SIM card is configured to: generate SIM card identity verification data corresponding to the SIM card identity verification request, and return the SIM card identity verification data to the operator server;
   the operator server is further configured to send the SIM card identity verification data to the service processing system; and
   the service processing system is further configured to perform identity verification based on the SIM card identity verification data.
13. A computer-readable storage medium, wherein the computer-readable storage medium stores a computer program, and when the computer program is executed by a processor, the steps in the method according to any one of examples 1 to 6, 7 and 8, or 9 to 11 are implemented.
14. An electronic device, comprising a processor and a storage, wherein the storage stores a computer program, and the computer program is suitable for being loaded and executed by the processor to perform the steps in the method according to any one of examples 1 to 6, 7 and 8, or 9 to 11.
15. A computer program product, wherein the computer program product stores at least one instruction, and when the at least one instruction is executed by a processor, the steps in the method according to any one of examples 1 to 6, 7 and 8, or 9 to 11 are implemented.

## Claims

1. A method for identity verification, the method performed by a service processing system and comprising:
in response to an identity verification requirement in a service processing process, generating (S102) an identity verification request that comprises a token, wherein the token is obtained by the service processing system by making a request to an operator server based on an obtained SIM card device number;
sending (S104) the identity verification request to the operator server, wherein the identity verification request is used to enable the operator server to send a SIM card identity verification request to a SIM card after checking that the token carried in the identity verification request is consistent with a pre-recorded token, and the SIM card identity verification request is used to obtain SIM card identity verification data; and
receiving (S106) SIM card identity verification data returned by the operator server, and performing identity verification based on the SIM card identity verification data.

2. The method according to claim 1, further comprising, before generating an identity verification request that comprises a token:
obtaining the SIM card device number, generating a token acquisition request based on the SIM card device number, and sending the token acquisition request to the operator server; and
receiving a token corresponding to the SIM card device number and returned by the operator server.

3. The method according to any one of claims 1 or 2, wherein the service processing system comprises a service client terminal and a service server, and wherein generating an identity verification request that comprises a token comprises:
in response to receiving the token returned by the operator server, generating, by the service client terminal, a service request that comprises the token, and sending the service request to the service server; and
processing, by the service server, the service request and generating an identity verification request that comprises the token.

4. The method according to claim 3, wherein receiving SIM (S106) card identity verification data returned by the operator server, and performing identity verification based on the SIM card identity verification data comprises:
receiving, by the service server, the SIM card identity verification data returned by the operator server, and performing identity verification on the service request based on the SIM card identity verification data.

5. The method according to claim 4, wherein the SIM card identity verification data are SIM card identity verification data signed by using a private key stored in the SIM card; and
the performing identity verification on the service request based on the SIM card identity verification data comprises:
performing signature verification on the SIM card identity verification data based on a public key stored in the service server; and
performing identity verification on the service request based on the SIM card identity verification data after the signature verification succeeds.

6. The method according to claim 4, further comprising, after the performing, by the service server, identity verification based on the SIM card identity verification data:
sending, by the service server, the identity verification result to the service client terminal.

7. A method for identity verification, the method performed by an operator server and comprising:
receiving (S302) an identity verification request sent by a service processing system, and checking, based on a pre-recorded token, a token carried in the identity verification request;
determining whether the token carried in the identity verification request is consistent with the pre-recorded token;
in response to determining that the token carried in the identity verification request is consistent with the pre-recorded token, generating (S304) a SIM card identity verification request corresponding to the identity verification request, and sending the SIM card identity verification request to the SIM card, so that the SIM card collects SIM card identity verification data based on the SIM card identity verification request; and
receiving (S306) the SIM card identity verification data sent by the SIM card, and sending the SIM card identity verification data to the service processing system, so that the service processing system performs identity verification based on the SIM card identity verification data.

8. The method according to claim 7, further comprising, before receiving an identity verification request sent by a service processing system:
in response to receiving a token acquisition request sent by the service processing system, generating a corresponding token based on the token acquisition request; and
recording the token and sending the token to the service processing system.

9. A method for identity verification, the method performed by a SIM card and comprising:
in response to receiving a SIM card identity verification request sent by the operator server, generating (S402) SIM card identity verification data corresponding to the SIM card identity verification request, wherein the SIM card identity verification request is generated after the operator server receives an identity verification request sent by a service processing system and checks that a token carried in the identity verification request is consistent with a pre-recorded token; and
returning (S404) the SIM card identity verification data to the operator server, so that the operator server sends the SIM card identity verification data to the service processing system, and the service processing system performs identity verification based on the SIM card identity verification data.

10. The method according to claim 9, wherein generating SIM card identity verification data corresponding to the SIM card identity verification request comprises:
launching a SIM card identity verification interface based on the SIM card identity verification request, and receiving a confirmation instruction and/or PIN code information entered by a user in the SIM card identity verification interface; and
generating the SIM card identity verification data based on the confirmation instruction and/or the PIN code information.

11. The method according to claim 9, wherein returning the SIM card identity verification data to the operator server comprises:
signing the SIM card identity verification data based on a private key stored in the SIM card, to obtain signed SIM card identity verification data; and
returning the signed SIM card identity verification data to the operator server.

12. An identity verification system, comprising a service processing system, an operator server, and a SIM card, wherein
the service processing system is configured to: generate an identity verification request that comprises a token, and send the identity verification request to the operator server, wherein the token is obtained by the service processing system by making a request to the operator server based on an obtained SIM card device number;
the operator server is configured to: check, based on a pre-recorded token, the token carried in the identity verification request, and when determining that the token carried in the identity verification request is consistent with the pre-recorded token, generate a SIM card identity verification request corresponding to the identity verification request, and send the SIM card identity verification request to the SIM card;
the SIM card is configured to: generate SIM card identity verification data corresponding to the SIM card identity verification request, and return the SIM card identity verification data to the operator server;
the operator server is further configured to send the SIM card identity verification data to the service processing system; and
the service processing system is further configured to perform identity verification based on the SIM card identity verification data.

13. A computer-readable storage medium, wherein the computer-readable storage medium stores a computer program, and when the computer program is executed by a processor, the steps in the method according to any one of claims 1 to 6, 7 and 8, or 9 to 11 are implemented.

14. An electronic device, comprising a processor and a storage, wherein the storage stores a computer program, and the computer program is suitable for being loaded and executed by the processor to perform the steps in the method according to any one of claims 1 to 6, 7 and 8, or 9 to 11.

15. A computer program product, wherein the computer program product stores at least one instruction, and when the at least one instruction is executed by a processor, the steps in the method according to any one of claims 1 to 6, 7 and 8, or 9 to 11 are implemented.
